(19) Europäisches Patentamt
European Patent Office
Office européen des brevets

(11) **EP 1 970 485 A1**

(12) **EUROPEAN PATENT APPLICATION**
published in accordance with Art. 158(3) EPC

(43) Date of publication:
**17.09.2008 Bulletin 2008/38**

(51) Int Cl.:
***D06N 3/00*** *(2006.01)* ***D04H 1/46*** *(2006.01)*

(21) Application number: **06834566.9**

(22) Date of filing: **13.12.2006**

(86) International application number:
**PCT/JP2006/324811**

(87) International publication number:
**WO 2007/069627 (21.06.2007 Gazette 2007/25)**

(84) Designated Contracting States:
**DE FR GB IT**

(30) Priority: **14.12.2005 JP 2005359812**

(71) Applicant: **Kuraray Co., Ltd.**
**Okayama 710-8622 (JP)**

(72) Inventors:
• **YOSHIDA, Yasuhiro**
**Okayama-shi, Okayama 702-8601 (JP)**
• **MEGURO, Masasi**
**Okayama-shi, Okayama 702-8601 (JP)**
• **EBATA, Hidetaka**
**Okayama-shi, Okayama 702-8601 (JP)**
• **YONEDA, Hisao**
**Okayama-shi, Okayama 702-8601 (JP)**

(74) Representative: **Vossius & Partner**
**Siebertstrasse 4**
**81675 München (DE)**

(54) **PROCESS FOR PRODUCING ENTANGLED OBJECT FOR ARTIFICIAL LEATHER**

(57) A method of producing an entangled fabric for artificial leathers including a step of uniting a woven/knitted fabric and an entangled nonwoven fabric by entanglement. The method includes (1) a step of superposing the woven/knitted fabric on one surface of the entangled nonwoven fabric; (2) a step of needle-punching the superposed body from a side of the entangled nonwoven fabric so as to allow fibers constituting the entangled nonwoven fabric to enter into the woven/knitted fabric and then penetrate through the woven/knitted fabric, thereby forming a nonwoven fabric layer composed of the penetrated fibers on an outer surface of the woven/knitted fabric; and (3) a step of needle-punching from a side of the nonwoven fabric layer so as to allow a part of the fibers which have penetrated through the woven/knitted fabric and form the nonwoven fabric layer to turn back into the woven/knitted fabric, thereby uniting the woven/knitted fabric and the entangled nonwoven fabric together by entanglement. The method hardly causes wrinkles, etc. and is good in process passing properties. The artificial leathers produced from the entangled fabric for artificial leathers have a good shape stability, a high-quality appearance and a soft, high-quality hand.

**Description**

TECHNICAL FIELD

The present invention relates to a method of producing an entangled fabric for artificial leathers. Particularly, the present invention relates to a method, of producing an entangled fabric for artificial leathers and artificial leathers such as suede-finished artificial leathers composed of the entangled fabric, which little lose their shape even after long term use, have a high-quality suede-finished appearance, a soft hand, an excellent strength and practical performance such as pilling resistance, and are suitable for the production of upholstery of interior furniture such as vehicle seats, cushion seats, sofas, and chairs.

BACKGROUND ART

Artificial leathers have been used in various applications such as interior furniture, clothes, shoes, briefcases, gloves, and upholstery of vehicle seats. In particular, in the application to upholstery of vehicle seats such as rail road seats, automotive seats, air-plane seats and watercraft seats and upholstery of interior furniture such as cushion seats, sofas and chairs, artificial leathers combining a good surface abrasion resistance and a shape stability free from elongation, collapse and wrinkles even after long term use have been keenly desired.

Artificial leathers having a substrate made of a fiber nonwoven fabric, particularly, a microfine fiber nonwoven fabric have found their application in various fields as high grade materials because of their soft and dense feeling resembling natural leathers. However, artificial leathers having a substrate made of only a microfine fiber nonwoven fabric easily lose their shape. For example, the upholstery of chairs produced from artificial leathers having a substrate made of only a microfine fiber nonwoven fabric are likely to be deformed by the long-term, repeating load of user's weight. To reduce the deformation, it has been generally employed to bond a woven/knitted fabric to the back side of artificial leathers. Although effective for preventing the deformation, the hand becomes hard and a product having complicated design is difficult to produce by sewing because wrinkles are easily formed.

A method of producing artificial leathers having a laminated substrate of a microfine fiber nonwoven fabric and a woven/knitted fabric has been proposed (for example, Patent Document 1). The artificial leathers produced by the proposed method have a hand softer than that of artificial leathers having a woven/knitted fabric bonded to the back side and a shape stability higher than that of artificial leathers having no woven/knitted fabric. However, in a known substrate laminated with a woven/knitted fabric, fibers constituting the woven/knitted fabric are easily exposed to the surface to deteriorate the process passing properties (properties that the treatment intended in each process is successfully made and the treated product is transferred to the next process stably without causing any troubles) and the hand of the obtained artificial leathers is not satisfactory.

[Patent Document 1] JP 4-1113B

DISCLOSURE OF THE INVENTION

An object of the present invention is to provide an entangled fabric for artificial leather for use as a substrate for artificial leathers which have a good shape stability resistant to the loss of shape even after long term use and a soft hand and are suitable for the production of upholstery of interior furniture such as vehicle seats, cushion seats, sofas, and chairs.

As a result of extensive study for achieving the above object, the inventors have reached the present invention. Namely, the present invention relates to a method of producing an entangled fabric for artificial leathers comprising a woven/knitted fabric and an entangled nonwoven fabric which are united together by entanglement, which comprises the following steps: (1) a step of superposing the woven/knitted fabric on one surface of the entangled nonwoven fabric; (2) a step of needle-punching the superposed body from a side of the entangled nonwoven fabric so as to allow fibers constituting the entangled nonwoven fabric to enter into the woven/knitted fabric and then penetrate through the woven/ knitted fabric, thereby forming a nonwoven fabric layer comprising the penetrated fibers on an outer surface of the woven/ knitted fabric; and (3) a step of needle-punching from a side of the nonwoven fabric layer so as to allow a part of the fibers which penetrate through the woven/knitted fabric to form the nonwoven fabric layer to turn back into the woven/ knitted fabric, thereby uniting the woven/knitted fabric and the entangled nonwoven fabric together by entanglement. The present invention further relates to a method of producing an artificial leather, comprising a step of impregnating a solution or an emulsion of an elastic polymer into the entangled fabric for artificial leathers produced by the above method. The present invention still further relates to a method of producing a suede-finished artificial leather, comprising a step of raising at least one surface of the artificial leather produced by the above method.

BEST MODE FOR CARRYING OUT THE INVENTION

The fibers (microfine fiber-forming fibers) convertible to microfine fibers of 0.5 dtex or less, preferably 0.0001 to 0.5 dtex are preferably used as the fibers for constituting the entangled nonwoven fabric because the resultant artificial leathers acquire a natural leather-like hand, although not particularly limited thereto. Although the microfine fibers can be directly spun from a single kind of polymer, it is preferred to convert microfine fiber-forming fibers composed of at least two kinds of polymers to microfine fibers in a later stage. Examples of the microfine fiber-forming fibers include extraction-type fibers in which the fibers are fibrillated to microfine fibers of the island component by dissolving or decomposing the sea component and division-type fibers in which the fibers are fibrillated to microfine fibers of each polymer by a mechanical or chemical treatment. The microfine fiber-forming fibers may be made into short fibers or long fibers having a fineness of 1 to 15 dtex, if necessary, through steps of stretching, heat treating, mechanical crimping and cutting.

The polymer for the microfine fibers may include at least one polymer selected from melt-spinnable polyamide such as 6-nylon, 66-nylon and 12-nylon and melt-spinnable polyester such as polyethylene terephthalate, polytrimethylene terephthalate, polybutylene terephthalate and copolymers thereof. The component for forming the microfine fibers may be included with a pigment such as carbon black and a known additive for fibers as long as the effect of the present invention is not adversely affected.

The component to be extracted or decomposed of the extraction-type fibers is a polymer having a solubility to an extraction solvent and a decomposability by a decomposing agent different from those of the microfine fiber-forming component, being less compatible with the microfine fiber-forming component, and having a melt viscosity or a surface tension smaller than those of the microfine fiber-forming component under spinning conditions. In addition, the component to be extracted or decomposed is required to have a solubility to an extraction solvent and a decomposability by a decomposing agent different from those of the elastic polymer to be impregnated into the entangled fabric for artificial leathers. Preferred examples thereof include known polymers based on polyvinyl alcohol or polyolefin.

When the short fibers are used to form the entangled nonwoven fabric, the fibers are carded and then made into a web through a webber. When the long fibers are used, a web is produced simultaneously with spinning the long fibers by a spun-bonding method, etc. The mass per unit area of the web depends upon the desired mass per unit area of entangled fabric for artificial leathers and the laminate structure of the entangled nonwoven fabric and the woven/knitted fabric, and preferably from 80 to 2000 g/m$^2$, more preferably from 100 to 1500 g/m$^2$ because the artificial leather combines a good hand and mechanical properties. The obtained webs are superposed in a desired mass per unit area or thickness, and pre-entangled, if necessary, by a known method such as needle punching and jet water to obtain an entangled nonwoven fabric which is to be united with a woven/knitted fabric by entanglement. To enhance the entanglement with the woven/knitted fabric, the needle punching density of the entangling treatment is preferably from 20 to 100 punch/cm$^2$ and more preferably from 25 to 80 punch/cm$^2$. The punching density referred to herein is a total number of felt needles punched on the web per unit area. For example, when the web is punched 50 times by a needle board having felt needles in a density of 10/cm$^2$, the punching density is 500 punch/cm$^2$.

The structure of the woven/knitted fabric is not critical. The fibers for forming the woven/knitted fabric are not particularly limited and may be produced from a known polymer as long as the resultant artificial leather has a practical strength in a desired use. When bundles of fibers are used to form the woven/knitted fabric, the number of twist is not particularly limited. In view of the hand of the resultant artificial leather, the number of twist is preferably small, for example 900 T/m or less, preferably from 80 to 900 T/m. The fineness is selected according to the intended use and preferably from 30 to 200 dtex. If being 200 dtex or less, the hand of the resultant artificial leather is good and the thickness of the woven/knitted fabric can be reduced. If being 30 dtex or more, the fabric density required for sufficient strength can be reduced, the entangled nonwoven fabric is easily united by needle punching, and the fibers constituting the woven/knitted fabric are hardly broken.

In view of the hand of the resultant artificial leather, the mass per unit area of the woven/knitted fabric is preferably from 30 to 200 g/m$^2$. If being 30 g/m$^2$ or more, the woven/knitted fabric has a sufficient strength and little loses its shape by a shift of fibers. If being 200 g/m$^2$ or less, the resultant artificial leather has a good hand and the woven/knitted fabric and the entangled nonwoven fabric are easily united together.

After superposing the woven/knitted fabric on one surface of the entangled nonwoven fabric, the entangling treatment is performed. Known methods of entangling the entangled nonwoven fabric and the wovew/knitted fabric include a needle punching method and a hydroentangling method (water jet method). The hydroentangling method is generally applicable to a fiber web comprising short fibers with a fiber length of about 1 to 10 mm and having a mass per unit area of about 20 to 150 g/m$^2$. When producing an artificial leather, particularly a suede-finished artificial leather having a high-quality surface appearance, the hydroentanglement is performed by two methods according to the fiber length.

A first method is a method generally employed in the production of suede-finished artificial leathers, in which microfine short fiber having a fiber length of about 1 to 10 mm are made into a fiber web having a mass per unit area of about 20 to 150 g/m$^2$ by a paper-making method, and after superposing one fiber web thus obtained on the woven/knitted fabric or interposing the woven/knitted fabric between two fiber webs, the entangling treatment is performed by water-jetting from the side of fiber web.

In the first method, since the fibers are short, the fibers moves and entangled sufficiently by the water jetting. However, to achieve an entangling degree required for obtaining a suede-finished artificial leather having an excellent appearance, the pressure of water jet is limited. Therefore, the mass per unit area of the resultant entangled body is reduced. Even in case of entangling a superposed body of one fiber web and one woven/knitted fabric, the amount of fibers which penetrate though the woven/knitted fabric to its outer surface is limited. Therefore, the fibers do not move enough to form a nonwoven fabric layer on the outer surface of the woven/knitted fabric. In addition, since the fibers are short, the raised fibers on the surface of the finally obtained suede-finished artificial leather are easily pulled out. If the foot of raised fibers is anchored by a binder to prevent the pilling, the hand becomes hard.

In the second method, microfine fiber-forming fibers of about 30 to 100 mm are made into a fiber web having a mass per unit area of about 200 to 600 g/m$^2$ by a carding method, etc. and the fiber web is then sufficiently entangled by a mechanical entangling method such as needle punching. The entangled fiber web as obtained or after converting the microfine fiber-forming fibers to microfine fibers is used to obtain a superposed body by superposing one fiber web on the woven/knitted fabric or interposing the woven/knitted fabric between two fiber webs. If exceeding 150 g/m$^2$, the total mass per unit area is reduced to 150 g/m$^2$ or less by slicing in two or other methods. Then, the entangling treatment is performed by water jetting from the side of fiber web.

In the second method, since the fibers are long, the fibers are not moved and entangled in a degree attained in the first method by a water jetting under conditions not damaging the fibers. Namely, the fibers in the fiber web merely enter into the space between the fibers of the woven/knitted fabric and hardly penetrate through the woven/knitted fabric to its outer surface. In addition, the fibers do not move enough to form a nonwoven fabric layer on the outer surface of the woven/knitted fabric. When a superposed body of one fiber web and one woven/knitted fabric is water-jetted from the side of fiber web, the fibers in the fiber web enter into the space between fibers of the woven/knitted fabric and then project on the outer surface of the woven/knitted fabric, thereby making the outer surface of the woven/knitted fabric rough. Therefore an additional water jet treatment for smoothing the outer surface of the woven/knitted fabric is optionally employed. In addition, the fiber web and the woven/knitted fabric are easily peeled off at their boundary because they are hardly entangled by the water jetting.

Therefore, the entanglement is preferably performed by a needle punching method in the present invention because the entangled nonwoven fabric and the woven/knitted fabric are effectively entangled.

First, a superposed body of an entangled nonwoven fabric and a woven/knitted fabric is needle-punched from the side of the entangled nonwoven fabric to allow the fibers constituting the entangled nonwoven fabric to enter into the woven/knitted fabric and then penetrate though the woven/knitted fabric (first needle punching step). In the first needle punching step, the superposed body is not needle-punched from the side of the woven/knitted fabric. If needle-punched from the side of the woven/knitted fabric, the resultant artificial leather is poor in mechanical properties because of insufficient entanglement between the woven/knitted fabric and the entangled nonwoven fabric.

The fibers which penetrate though the woven/knitted fabric form a nonwoven fabric layer on the outer surface (the surface of the woven/knitted fabric not facing the entangled nonwoven fabric). With this nonwoven fabric layer, the resultant artificial leather has sufficient mechanical properties and a natural leather-like hand. In addition, the defect such as surface wrinkles is avoided in the steps after the entangling treatment.

Then, the needle punching is performed from the side of the nonwoven fabric layer which is formed on the outer surface of the woven/knitted fabric, thereby allowing the fibers penetrated through the woven/knitted fabric and forming the nonwoven fabric layer to turn back (second needle punching step). The term "turn back" means that at least a part of the fibers penetrated through the woven/knitted fabric and forming the nonwoven fabric layer are moved toward the side of the woven/knitted fabric by the needle punching. By allowing the fibers constituting the nonwoven fabric layer to turn back, the fibers penetrated through the woven/knitted fabric enter again into the woven/knitted fabric. Therefore, the fibers constituting the entangled nonwoven fabric are effectively locked to prevent the fiber pull-out of the resultant suede-finished artificial leather. Effect of preventing the fibers on the back side from pilling during dyeing and hot-water relaxation treatment can be additionally obtained.

The ratio of the nonwoven fabric layer formed on the outer surface of the woven/knitted fabric by the two-stage needle punching step of the present invention is preferably 5 to 40% of the mass per unit area of the entangled nonwoven fabric which is superposed to the woven/knitted fabric in the first needle punching step. If being 5% or more, the minimum uniformity of the entangled nonwoven fabric and the woven/knitted fabric acceptable in the present invention is obtained and the defect such as peeling and slippage between the layers of the entangled fabric for artificial leather is difficult to occur. If being 40% or less, the fiber damage is prevented in the entangled nonwoven fabric and the woven/knitted fabric, and a unified, soft suede-finished artificial leather having a natural leather-like, high-quality appearance and hand is obtained.

The punching density (P1) in the first needle punching step is preferably from 300 to 2500 punch/cm$^2$, and

more preferably from 600 to 1300 punch/cm$^2$. If being 300 punch/cm$^2$ or more, the entangled nonwoven fabric and the woven/knitted fabric are entangled sufficiently. If being 2500 punch/cm$^2$ or less, the fiber damage is prevented in the entangled nonwoven fabric and the woven/knitted fabric. In view of obtaining a sufficient nonwoven fabric layer, the penetration depth of needles is selected so that the barb nearest the tip of needles penetrates through the woven/knitted fabric preferably by 5 mm or more, and more preferably by 5 to 20 mm over the outer surface thereof.

The punching density (P2) in the second needle punching step is preferably from 50 to 1000 punch/cm$^2$, more preferably from 80 to 700 punch/cm$^2$, and particularly preferably from 100 to 500 punch/cm$^2$. If being 50 punch/cm$^2$ or more, a part of the fibers successfully turns back, and the hand and mechanical properties are prevented from becoming uneven. If being 1000 punch/cm$^2$ or less, the fiber damage is prevented in the woven/knitted fabric. The penetration depth of needles is preferably selected so that the barb nearest the tip of needles does not penetrate through the entangled nonwoven fabric outer surface.

The ratio of the punching density (P1) and the punching density (P2) is preferably larger than 1/1, because the resultant artificial leather has a uniform and natural leather-like hand. The ratio is preferably 2/1 or more and particularly preferably 3/1 or more, because the fiber pull-out of the suede-finished artificial leather is effectively prevented. The ratio is more preferably 20/1 or less, because wrinkles hardly occur and a sufficient entanglement is combined with mechanical properties.

By the above entangling method, the entangled fabric for artificial leathers of the present invention having excellent properties can be produced. The mass per unit area of the entangled fabric for artificial leathers is preferably from 80 to 1200 g/m$^2$ and the total thickness is preferably from 0.35 to 8.0 mm. In the entangled fabric for artificial leathers, the thickness of the entangled nonwoven fabric is preferably from 0.2 to 7.5 mm, the thickness of the woven/knitted fabric is preferably from 0.1 to 1.5 mm, and the thickness of the nonwoven fabric layer formed on the outer surface of the woven/knitted fabric is preferably from 0.05 to 1.5 mm.

In view of obtaining a natural leather-like hand, the entangled fabric for artificial leathers thus obtained is made into a substrate for artificial leathers preferably by impregnating and coagulating an elastic polymer. Any of known polyurethane resins, acrylic resins and other polymers which are used as an impregnant for artificial leathers are usable as the elastic polymer, with polyurethane resins being preferred in view of a hand and properties. Preferred examples of polyurethane resins include polyester ether-based polyurethane, polylactone-based polyurethane and polycarbonate-based polyurethane, which are produced by the solution polymerization, melt polymerization or bulk polymerization of a polymer diol and an organic diisocyanate in the presence of a compound having two active hydrogen atoms. The polymer diol is preferably at least one compound selected from polyester diol, polyether diol, polyester ether diol, polylactone diol and polycarbonate diol, each having an average molecular weight of from 700 to 3000. The organic diisocyanate is preferably at least one compound selected from organic diisocyanates, aliphatic diisocyanates and alicyclic diisocyanates. Another organic diisocyanate or triisocyanate may be combinedly used, if needed. Examples of the compound having two active hydrogen atoms include low molecular diols, low molecular diamines, hydrazine, and hydroxylamine.

The method for impregnating polyurethane is not particularly limited. For example, usable are a method in which the entangled fabric for artificial leathers is dipped and nipped in a solution or dispersion (emulsion, etc.) of polyurethane and a method in which a solution or dispersion of polyurethane is coated on the entangled fabric for artificial leathers and rubbed therein by a roll rotating at a high speed. The polyurethane concentration in the solution or dispersion is preferably from 5 to 50% by mass. The impregnated polyurethane is coagulated by a wet coagulation in which the entangled fabric for artificial leathers is immersed in a liquid containing a non-solvent for polyurethane or by a dry coagulation in which an aqueous emulsion (dispersion) of polyurethane is gelled and dried under heating. The immersion time and temperature and the heat-drying temperature and time are selected from those employed in the known production of artificial leathers.

The solution or dispersion of the elastic polymer may be included with, if needed, an additive such as colorant, for example, carbon black and pigment, coagulation regulator, antioxidant and dispersant. In view of a soft hand and elastic recovery of the artificial leather, the content of the elastic polymer (solid basis) in the entangled fabric for artificial leathers is preferably from 5 to 50% by mass and more preferably from 10 to 40% by mass of the amount of the entangled fabric for artificial leathers before the conversion to microfine fibers. If being 5% by mass or more, a dense, elastic sponge (porous structure) is formed and a soft hand is obtained. If being 50% by mass or less, the hand is prevented from becoming rubber-like, and the shape stability is enhanced by the woven/knitted fabric to prevent the less of shape.

When the entangled nonwoven fabric and/or the woven/knitted fabric are formed by microfine fiber-forming fibers, the microfine fiber-forming fibers are converted to microfine fibers or bundles of microfine fibers, to obtain an artificial leather. The conversion is performed by a method of removing at least one polymer from the microfine fiber-forming fibers (sea component polymer in case of sea-island fibers) by dissolution in a solvent or decomposition by a decomposer, or a mechanical or chemical treatment. The details of the operations and conditions axe selected from those employed in the known production of artificial leathers.

The conversion to microfine fibers may be carried out before the impregnation of the elastic polymer. However, if the solution of the elastic polymer is impregnated and coagulated after the conversion to bundles of microfine fibers, the elastic polymer adheres to the microfine fibers to likely harden the hand. Therefore, the conversion to microfine fibers is preferably carried out after the impregnation of the elastic polymer. If the conversion to microfine fibers is carried out before the impregnation of the elastic polymer, it is referred to provisionally impregnate a filler such as polyvinyl alcohol, which can be removed by dissolution in the later steps, into the entangled fabric for artificial leathers to prevent the adhesion between the microfine fibers and the elastic polymer. Then the elastic polymer is impregnated and thereafter the filler is removed. The apparent density of the artificial leather thus obtained is preferably from 0.2 to 0.7 $g/cm^3$ in view of hand.

The substrate for artificial leathers is made into either suede-finished artificial leathers or grain-finished artificial leathers. Particularly, in the production of suede-finished artificial leathers, after regulating the thickness of the substrate for artificial leathers to a desired level by dicing or buffing, the surface is buffed by a known method using sandpaper, etc. to form a raised surface comprising the microfine fibers or the bundles of microfine fibers and then the raised surface is dyed. By using the entangled fabric for artificial leathers of the present invention, the fiber pull-out and the fall of raised fibbers are markedly prevented in the steps until the suede-finished artificial leathers are finally obtained. If the apparent density of the resultant artificial leather is as relatively low as 0.35 $g/cm^3$ or less, the obtained suede-finished artificial leather has a sufficient strength and is excellent in practically important performance such as pilling resistance, abrasion resistance and fastness of dyeing even when the content of the elastic polymer is as relatively low as 25% by mass or less.

In view of the shape stability, the resultant suede-finished artificial leathers and grain-finished artificial leathers preferably have an elongation at constant load of 10% or less and a residual strain of 3% or less.

EXAMPLES

The present invention will be described with reference to the example. However, it should be noted that the scope of the preset invention is not limited thereto. The "part(s)" and "%" in the following examples are based on mass unless otherwise noted.

The elongation at constant load and the residual strain were measure as follows according to JASO M 403-88 6.5 (Test Method for Automotive Seat-Trim Fabrics) by Society of Automotive Engineers of Japan, Inc. Three test pieces (width: 80 mm, length: 250 mm) where cut out of an artificial leather along each of the machine direction and the transverse direction (total 9 test pieces). Two gage marks were drawn at the central portion in the width direction of each test piece at a distance of 100 mm ($L_0$). Then, the test piece was clipped onto an upper grip of Martens fatigue tester at its lengthwise end. A load of 98.1 N (10 kgf) inclusive of the lower grip was put on the other lengthwise end at a grip distance of 150 mm. After 10 min, the distance between gage marks $L_1$ (mm) was measured and the load was removed. The test piece was placed on a flat stand and the distance between gage marks $L_2$ (mm) was measured after 10 min from the removal of load. The elongation at constant load (%) and the residual strain (%) were calculated from the following equations and the results are expressed by an average on 9 test pieces.

$$\text{Elongation at constant load (\%)} = (L_1 - L_0)/L_0 \times 100$$

$$\text{Residual strain (\%)} = (L_2 - L_0)/L_0 \times 100$$

wherein $L_0$ is the distance (100 mm) between gage marks before the test, $L_1$ is the distance (mm) between gage marks after 10 min of loading, and $L_2$ is the distance (mm) between gage marks after 10 min from the removal of load. The upholstery of chair shows a better shape stability even after long term use, if the elongation at constant load and residual strain are smaller.

EXAMPLE 1

Preparation of entangled nonwoven fabric

Staples of sea-island composite fibers composed of polyethylene terephthalate as the island component and a low density polyethylene as the sea component (number of islands of 20; polyethylene terephthalate:low density polyethylene = 60:40; fineness of 4.0 dtex; fibber length of 51mm;12 crimp/inch) ware made into a web by carding and cross lapping The web was entangled by needle punching in a density of 40 ponch/$cm^2$, to obtain an entangled nonwoven fabric comprising microfine fiber-forming fibers, which had a mass per unit area of 300 $g/m^2$.

Preparation of woven fabric

Polyester yarns (56 dtex/24 f) subjected to false twisting were further subjected to additional twisting by 600 T/m and then woven by a water jet weaving machine at a fabric density of $120 \times 95$/inch, to obtain a plain-woven fabric having a mass per unit area of 60 g/m$^2$.

First needle punching step

The entangled nonwoven fabric and the plain-woven fabric were superposed to each other. The superposed body was needle-punched from the side of the entangled nonwoven fabric using single barb felt needles in a punching density of 1200 punch/cm$^2$ and a penetration depth which allowed the barb nearest the tip of needles to penetrate through the plain-woven fabric by 6 mm over the outer surface thereof, thereby allowing the fibers constituting the entangled nonwoven fabric to penetrate through the plain-woven fabric and form a nonwoven fabric layer on the outer surface of the plain-woven fabric.

Second needle punching step

Then, the superposed body was needle-punched from the side of the nonwoven fabric layer in a punching density of 300 punch/cm$^2$ and a penetration depth so that the barb nearest the tip of needles did not penetrate through the entangled nonwoven fabric to the outer surface thereof, thereby allowing the fibers which had penetrated through the plain-woven fabric and formed the nonwoven fabric layer to turn back into the plain-woven fabric. By this treatment, an entangled fabric for artificial leathers having a mass per unit area of 370 g/m$^2$ which was composed of the entangled nonwoven fabric and the plain-woven fabric united by entanglement was obtained.

Impregnation of elastic polymer/Conversion to microfine fibers

A 15% solution of a polyether-based polyurethane in dimethylformamide (DMF) was impregnated into the obtained entangled fabric for artificial leathers. Then, the entangled fabric was immersed in a mixed bath of DMF and water to wet-coagulate polyurethane. After removing the remaining DMF by washing with water, the sea component polyethylene was removed by extraction in a toluene bath at 85 °C. Immediately thereafter, the remaining toluene was azeotropically removed in a hot water bath at 1.a0 °C and then the fabric was dried, to obtain a substrate for artificial leathers having a mass per unit area of 295 g/m$^2$ and a thickness of 0.8 mm. In the steps of impregnating the elastic polymer and converting to microfine fibers, no wrinkle was formed and the production was performed stably.

Suede-finished artificial leather

The surface of the nonwoven fabric layer on the obtained substrate for artificial leathers was buffed by #180 sandpaper twice to regulated the thickness to 0.7 mm while smoothening the surface. Then the surface of the entangled nonwoven fabric was buffed by #240 sandpaper twice and #400 sandpaper twice successively to form a raised surface comprising the microfine fibers of polyethylene terephthalate. The fiber pull-out was hardly observed during the suede-finishing treatment and the suede-finished surface was covered with dense raised fibers.
Then, the suede-finished artificial leather was immersed in a hot water bath at 80 °0 for 20 min to allow it to be well wetted with hot water and relaxed, and thereafter, dyed with a disperse dye using a high-pressure jet dyeing machine at a bath ratio of 1:15 and dried, to obtain a dyed suede-finished artificial leather. The obtained suede-finished artificial leather had an elongation at constant load of 4% and a residual strain of 1% or less. In addition, the surface of the suede-finished artificial leather was covered with the raised fibers without causing pull-out of the raised fibers, to present a high-quality suede-finished appearance.

COMPARATIVE EXAMPLE 1

A substrate for artificial leathers was obtained in the same manner as in Example 1 except for needle-punching a superposed body of an entangled nonwoven fabric and a plain-woven fabric in a punching density of 750 punch/cm$^2$ simultaneously from both sides of the entangled nonwoven fabric and the plain-woven fabric. Using the obtained substrate for artificial leathers, a dyed suede-finished artificial leather was produced in the same manner as in Example 1. The obtained suede-finished artificial leather had an elongation at constant load of 4% and a residual strain of 1%. Although the degree of strain was the same as that of Example 1, the hand was hard as compared with Example 1 and fine wrinkles were formed on the surface. In addiction, unlike Example 1, the fiber pull-out occurred in the relaxation and dyeing steps and many raised fibers fell. Therefore the raised surface was rough and polyurethane was exposed to the surface.

INDUSTRIAL APPLICABIILITY

By using the entangled fabric for artificial leathers of the present invention, a suede-finished artificial leather which little loses its shape even after long term use and has a high-quality suede-finished appearance and a soft hand is produced. In addition, wrinkles, etc. are hardly formed during the production thereof, and therefore, the process passing properties are good. The entangled fabric for artificial leathers of the present invention is particularly useful as the materials for the upholstery of vehicle seats such as rail road seats, automotive seats, airplane seats and watercraft seats and the upholstery of interior furniture such as sofas, cushions and chairs. The entangled fabric for artificial leathers is effectively used in other uses, for example, the production of clothes, shoes, briefcases, pouches, or gloves.

**Claims**

1.  A method of producing an entangled fabric for artificial leathers comprising a woven/knitted fabric and an entangled nonwoven fabric which are united together by entanglement, which comprises the following steps:

    (1) a step of superposing the woven/knitted fabric on one surface of the entangled nonwoven fabric;
    (2) a step of needle-punching the superposed body from a side of the entangled nonwoven fabric so as to allow fibers constituting the entangled nonwoven fabric to enter into the woven/knitted fabric and then penetrate through the woven/knitted fabric, thereby forming a nonwoven fabric layer comprising the penetrated fibers on an outer surface of the woven/knitted fabric; and
    (3) a step of needle-punching from a side of the nonwoven fabric layer so as to allow a part of the fibers which have penetrated through the woven/knitted fabric and form the nonwoven fabric layer to turn back into the woven/knitted fabric, thereby uniting the woven/knitted fabric and the entangled nonwoven fabric together by entanglement.

2.  The method according to claim 1, wherein the needle punching of the step (2) is performed in a punching density of 300 to 2500 punch/cm$^2$, and the needle punching of the step 3 is performed in a punching density of 50 to 1000 punch/cm$^2$.

3.  The method according to claim 1 or 2, wherein the needle punching of the step (2) is performed in a penetration depth such that a barb nearest a tip of needles penetrates through the woven/knitted fabric by 5 mm or more over the outer surface thereof.

4.  The method according to any one of claims 1 to 3, wherein the needle punching of the step (3) is performed in a penetration depth such that a barb nearest a tip of needles does not penetrate through the woven/knitted fabric.

5.  A method of producing a substrate for artificial leathers, which comprises a step of impregnating a solution or emulsion of an elastic polymer into the entangled fabric for artificial leathers produced by the method according to any one of claims 1 to 4.

6.  A suede-finished artificial leather which is produced by raising at least one surface of the substrate for artificial leathers produced by the method according to claim 5.

| INTERNATIONAL SEARCH REPORT | International application No. |
|---|---|
| | PCT/JP2006/324811 |

**A. CLASSIFICATION OF SUBJECT MATTER**
*D06N3/00(2006.01)i, D04H1/46(2006.01)i*

According to International Patent Classification (IPC) or to both national classification and IPC

**B. FIELDS SEARCHED**

Minimum documentation searched (classification system followed by classification symbols)
D06N3/00, D04H1/46

Documentation searched other than minimum documentation to the extent that such documents are included in the fields searched
Jitsuyo Shinan Koho   1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2005-330595 A (Kuraray Co., Ltd.), 02 December, 2005 (02.12.05), Full text (Family: none) | 1-6 |
| A | JP 2005-54345 A (Toray Industries, Inc.), 03 March, 2005 (03.03.05), Full text & US 2006-0234587 A   & EP 001647620 A & WO 2005-007960 A1   & CA 002532586 A | 1-6 |
| A | JP 11-269751 A (Asahi Chemical Industry Co., Ltd.), 05 October, 1999 (05.10.99), Full text (Family: none) | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 March, 2007 (05.03.07) | 13 March, 2007 (13.03.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/324811

C (Continuation).   DOCUMENTS CONSIDERED TO BE RELEVANT

| Category* | Citation of document, with indication, where appropriate, of the relevant passages | Relevant to claim No. |
|---|---|---|
| A | JP 61-34287 A (Toray Industries, Inc.),<br>18 February, 1986 (18.02.86),<br>& US 004741075 A1        & EP 000176181 A2<br>& DE 003586958 A        & DE 003586958 T<br>& CA 001240885 A        & AT 000084330 T | 1-6 |

Form PCT/ISA/210 (continuation of second sheet) (April 2005)

**EP 1 970 485 A1**

## REFERENCES CITED IN THE DESCRIPTION

### Patent documents cited in the description

- JP 4001113 B